# EUROPEAN PATENT SPECIFICATION

(11) **EP 0 822 678 B1**
(45) Date of publication and mention of the grant of the patent: **30.11.2005**
(21) Application number: 97112083.7
(22) Date of filing: 15.07.1997
(51) Int. Cl.: H04J 3/08, H04L 12/437, H04J 3/14, H04L 12/46

(54) **Alternate ring restoration technique**
Wiederherstellungstechnik mit Alternativring
Technique de restauration par un anneau alternatif

(30) Priority: 29.07.1996 US 681747
(43) Date of publication of application: 04.02.1998
(73) Proprietor: AT&T Corp., New York, NY 10013-2412 (US)
(72) Inventor: Eslambolchi, Hossein, Basking Ridge, New Jersey 07920 (US)
(74) Representative: Kuhnen & Wacker

(56) References cited:
- US-A- 4 835 763
- US-A- 5 065 399
- GROVER W D: "THE SELFHEALING NETWORK A FAST DISTRIBUTED RESTORATION TECHNIQUE FOR NETWORKS USING DIGITAL CROSSCONNECT MACHINES" GLOBAL TELECOMMUNICATIONS CONFERENCE, TOKYO, NOV. 15 - 18, 1987, vol. 2, 15 November 1987, pages 1090-1095, XP000601764 INSTITUTE OF ELECTRICAL AND ELECTRONICS ENGINEERS

## Description

### Technical Field

This invention relates to a method of restoring traffic upon the failure of at least one link in a ring of a transmission system for carrying telecommunications traffic according to claim 1.

### Background Art

From US-A-5,065,399 a rapid restoration technique of a telecommunication path between network nodes after an interrupting network link failure is known. This known rapid restoration technique utilizes a distributed system of selective flooding for dynamically reconfiguring the internodal path in a manner, which will ensure the most economical use of intermediate links. A help message transmitted from one of the terminating nodes to each contiguous neighboring node requests use of the uncommitted bandwidth of each respective link. This wave of messages is propagated selectively, along paths having maximum available bandwidth and least number of links, through the network by each successive receiving node until the help message reaches the other terminating node of the failed link. An acknowledgement message returned to the initial terminating node via propagation links offering the maximum bandwidth establishes a reconfigured path providing the greatest bandwidth recovery. In the event that such a path does not completely satisfy the original bandwidth requirement, additional paths are established by successive waves of request messages until the balance of the requirement is met.

However, this rapid restoration technique is not based on a ring-based network.

From the literature Grover W.D. "The Selfhealing™ Network" a fast distributed restoration technique for networks using digital cross-connect machines" Global Telecommunications Conference, Tokyo, Nov. 15 - 18, 1987, vol. 2, 15 November 1987, pages 1090-1095, XP00601764 Institute of Electrical and Electronics Engineers, a similar technique is known of a restoring traffic upon the failure of at least one link in a transmission system. According to this known method, restoration is realized in the form of re-establishment of trunk-bearing carrier groups after loss of all or most of physical transmission facility between two sites through geographical rerouting via redundant network capacity. Also this known method is not based on a ring-based network.

From US-A-4,835,763 a survivable ring network is known that can withstand a cut link or failed node without the need for a central controller or protection switching among links. This known technique comprises two rings carrying identical multiplexed node-to-node communications in opposite directions. When a system error is detected in a downstream node, error signals are inserted in all subrate channels. Each subrate channel receiver receives identical communications from each ring. If one subrate channel has an error signal, the receiver selects the alternate channel.

A typical Synchronous Optical Network (SONET) ring transmission system for carrying telecommunications traffic includes a plurality of nodes at which telecommunications traffic may originate and terminate. In practice, each node takes the form of a fiber-optic hub and associated cross-connect system for coupling to a telephone switch that sends traffic to, and receives traffic from, the node. Every node is linked to each of a pair of neighboring nodes in daisy-chain fashion by at least one optical fiber link to yield ring-like structure across which telecommunications traffic may pass. When the nodes are separated from each other by large distances, it is not desirable from a cost standpoint to connect all of the nodes in a single ring. Rather, the nodes that we relatively closely spaced are connected in individual rings having at lent one node connected to a node in another ring. Alternatively, two or more rings may effectively share nodes to permit traffic to pass from one ring to another.

If a single fiber optic link in a ring should fail, the traffic that would otherwise pass over the failed link can usually be re-routed about the remainder of the ring between an origin and node (where traffic originates) and a destination node (at which traffic terminates). Should two links fail in the same ring of a multi-ring system, it has been necessary in the past to physically repair at least one of the failed links in order to restore traffic on the ring. Such physical repairs are often time consuming. While such repairs are being made, traffic remains disrupted.

The above-cited prior art addresses the physical repair problem by disclosing various techniques for automating the restoration process. A particular feature of such an automated process, as described in the above-cited US-A-5,065,399, is the selection of an alternative route based on minimizing the "hop count" when selecting the restoration route (which can be regarded as equivalent to minimizing the number of node crossings). However, further improvement in restoration route selection, in order to achieve transmission traffic optimization, is desirable.

### Summary of the Invention

It is therefore an object of the present invention, to provide a technique for restoring traffic in a multiple ring system via alternate rings when two or more links in one ring have failed, wherein the restoring operation is no more time consuming.

According to the inventive method this object is solved by the features of claim 1.

Improved embodiments of the inventive method result from subclaims 2 to 4.

According to the present invention should one or more links fail within a ring, a hunt is first undertaken to establish what restoration capacity exists on the rings within the transmission system (in terms of possible alternative paths between an origin and destination nodes). In practice, the restoration capacity hunt is accomplished by a processor at a node associated with a failed link. Upon detecting a failed link, the processor queries at least one of its neighboring nodes by flooding a packet to that node to cause it to ascertain its characteristics, and to determine whether it possess any spare capacity on its associated links. Each neighboring node then queries at least one of its neighboring nodes by flooding a packet thereto to cause each successive node to ascertain its characteristics and whether its possess spare capacity on its associated links. Eventually, the nodes are successively queried in this manner to establish the existing restoration capacity in each of the rings within the transmission system.

After the restoration capacity is determined, a selected set of restoration capacities (i.e., links) is reserved. The selected set of restoration capacities is reserved by choosing among the restoration capacities at the various nodes, a collective set of capacities (i.e., a set of possible links) that optimize the transmission of traffic between the origin and destination nodes. Accordingly, if two or more possible restoration capacities exist between the origin and destination nodes, the restoration capacity that yields the lower distance and traverses the fewest number of nodes is selected. Thereafter, a transmission path is routed along the selected capacities, typically by cross connecting the corresponding links in the reserved set of restoration capacity.

### Brief Description of the Drawings

FIGURE 1 is a block schematic diagram of a multi-ring transmission system in accordance with the prior art;
FIGURE 2 depicts the transmission system of FIG. 1 upon a failure of a link in one of the rings;
FIGURE 3 depicts a packet sent by a processor within the transmission system of FIG. 1 for causing each neighboring node to ascertain its characteristic and its available restoration capacity upon the failure of a link;
FIGURE 4 depicts a table illustrating the exemplary restoration capacities in the transmission system of FIG. 1; and
FIGURE 5 depicts a restoration path within the transmission system of FIG. 1 that is selected in accordance with the available restoration listed in FIG. 4.

### Detailed Description

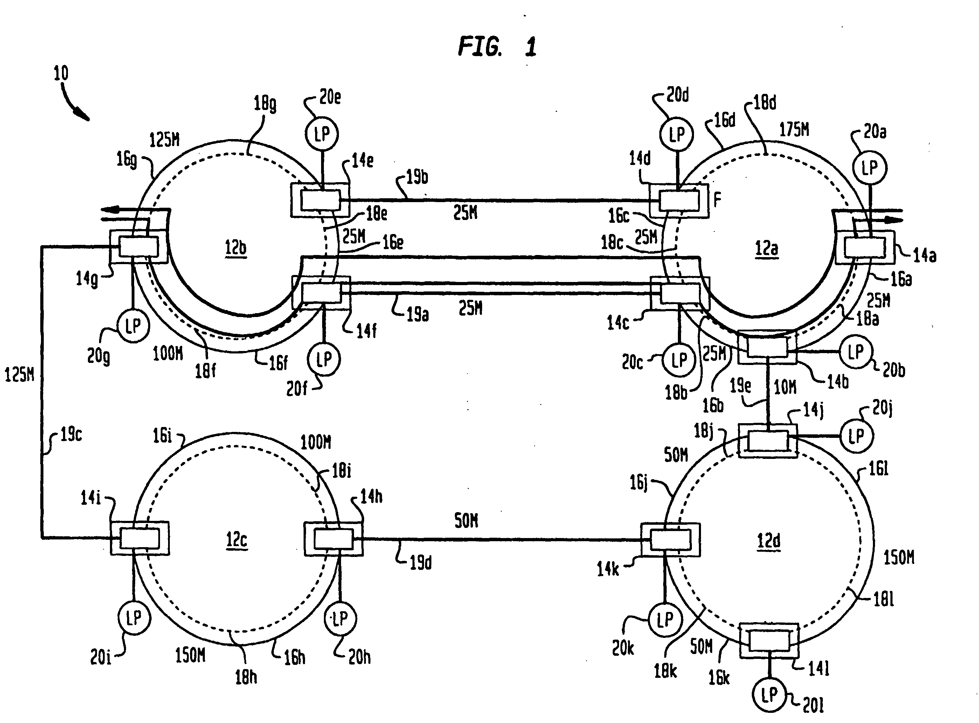

FIGURE 1 illustrates a conventional SONET ring transmission system 10 comprised of four individual rings 12*a*-12*d* although a greater or lesser number of rings may be present. Each of the rings 12*a*-12*d* comprises two or more nodes at which telecommunications traffic may originate and terminate. In the illustrated embodiment, the ring 12*a* includes four nodes 14*a-*14*d,* whereas the ring 12b includes three nodes 14e-14g. The ring 12c comprises two nodes 14*h*-14*i*, whereas the ring 12*d* comprises three nodes 14*j*-14*l*. Typically, each of the nodes 14*a*- 14*l* comprises a well known fiber optic hub (not shown) and associated cross-connect system for coupling to a telephone switch (not show) of a type that is well known.

Each pair of nodes in each ring is linked by one of main optical fiber links 16*a*-16*l*, each main fiber link including at least a pair of optical fibers (not shown) for carrying traffic in opposite directions. In the illustrated embodiment, the node pairs 14*a*-14*b*, 14*b*-14*c*, 14*c*-14*d*, 14*d*-14*a*, 14*e*-14*f*, 14*f*-14*g*, 14*g*-14*e*, 14*h*-14*i*, 14*i*-14*h*, 14*j*-14*k* 14*k*-14*l* and 14*l*-14*k* are coupled by main links 16*a*-16*l*, respectively. Additionally, the node pairs *14a-14b,* 14*b*-14*c*, 14*c*-14*d*, 14*d*-14*a*, 14*e*-14*f*, 14*f*-14*g*, 14*g*-14*e*, 14*h-*14*i*, 14*i-*14*h,* 14*j*-14*k*, 14*k*-14*l* and 14*l*-14*k* are also coupled by optical fiber links 18*a*-18*l*, respectively (shown in dashed lines). The optical fiber links 18*a*-18*l* are designated as "protection" links because each is held in reserve and is usually employed only in the event that a corresponding one of the main links 16*a*-16*l* becomes inoperative.

To allow traffic originating within one of the rings 12*a*-12*d* to pass to another ring, at least one node within each ring is connected to another node in another ring. In the illustrated embodiment, the node pairs 14*d*-14*e*, 14*c*-14*f*, 14*g*-14*i*, 14*h*-14*k* 14*j*-14*b*, are each linked by one of optical fiber links 19*a*-19*e*, respectively.

Associated with each of the nodes node 14*a*-14*l* is one of line processors (LP) 20*a*-20*l* that monitors the traffic at the associated node. Each of the LPs 20*a*-20*l* has capability to detect the absence of traffic at the node should one of the corresponding links coupled to node fail.

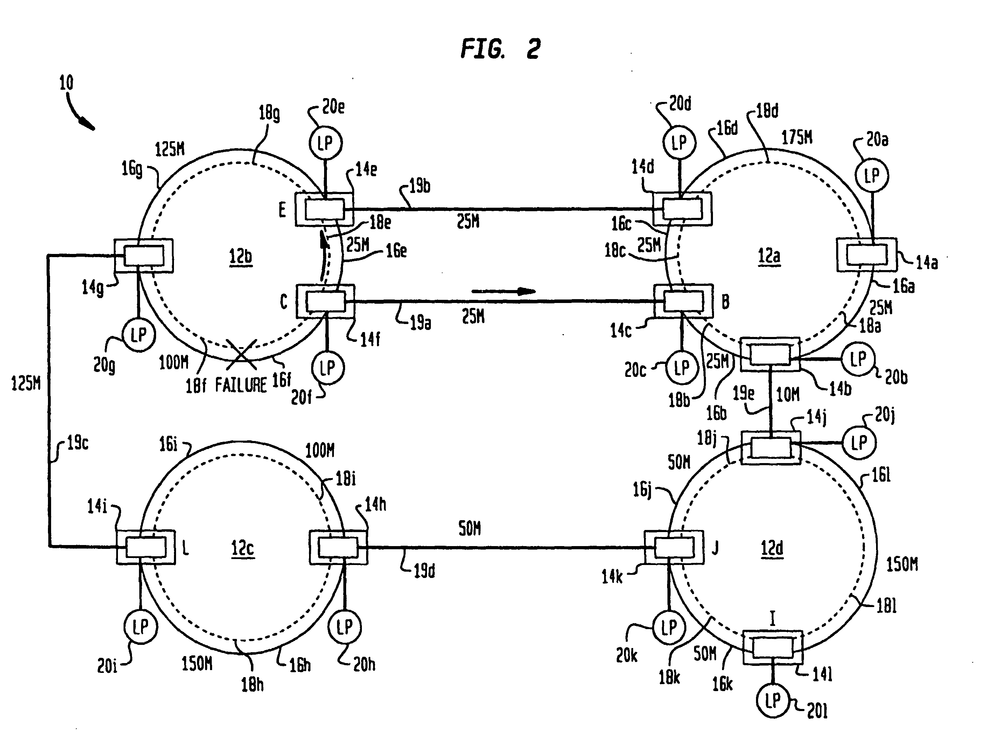

While the transmission system 10 is designed for very high reliability, failures can and do occur. Often such failures are due to external causes. For example, a main optical fiber link, such as link 16*f* in ring 12*b*, as well its associated protection link 18*f*, may become severed as a result of inadvertent excavation. Such a failure is depicted in FIG. 2 by virtue of the "X" superimposed on these links. Should both these links fail, then no traffic can pass between the nodes 14*f* and 14*g* across either of the links 16fand 18*f*.

Ordinarily, when both the main and protection links 16fand 18*f* fail, the traffic that would otherwise be carried by these links between the nodes 14*f* and 14*g* would be re-routed across the main optical fiber links 16*e* and 16*g* (or the protection links 18*e* and 18*g*). However, one of the main links 16*e* and 16*g*, as well as an associated one of protection links 18*e* and 18*g*, respectively) may also be in operative. For instance, one of the links 16*e* and 16*g* (and an associated one of the protection links 18*e* and 18*g*, respectively) may be unavailable because of scheduled maintenance. Thus, it may not be possible to route the traffic within the ring 12*b* on the links 16*e* and 16*g* or their associated protection links 18*e* and 18*g*, respectively.

In the past, the failure of two links in a given ring traffic required physical restoration of at least one link to restore traffic. Physical restoration of a severed link is a timely process. A repair crew must be dispatched to the site of the link and the appropriate repairs must be made.

In accordance with the invention, a technique is provided for automatically restoring traffic on alternate rings within the system 10 under the circumstances when two or more links in a single ring have failed. The traffic restoration technique of the invention involves the following three phases:
1) Hunting for available restoration capacity on the rings 12*a*-12*d*;
2) Reserving the restoration capacity within the rings that optimizes traffic transmission between a selected pair of nodes; and
3) Cross-connecting the links associated with the reserved restoration capacity to route a transmission path between the selected nodes.
Each of these phases will be described in detail below.

### Phase 1 - Restoration Capacity Hunt

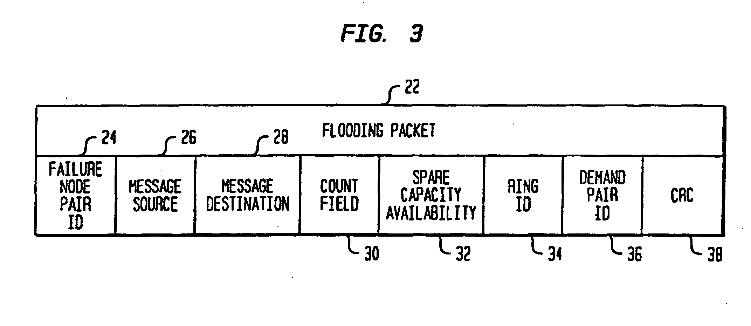

The hunt for available restoration capacity within the transmission system 10 is initiated by the line processor at a node associated with a failed link. In the illustrated embodiment, upon the failure of the links 16*f* and 18*f* in ring 12*b* in FIG. 2 at time T₀, the processor 20*f* commences the restoration capacity hunt. (It should be understood that the hunt could be commenced by the processor 20*g*.) Upon detecting a transmission failure, the processor 20*g* generates a flooding packet 22 (see FIG. 3) at time T₁ for the purpose of causing at least one of its neighboring nodes (14*e* and 14*f*) to establish their characteristics and to determine their available restoration capacity.

Referring to FIG. 3, each flooding packet 22 comprises a plurality of fields that individually store information associated with the capacity hunt. Field 24 stores information that identifies the failure node pair, i.e., the two nodes whose connecting links have failed. Thus, when links 16*f* and 18*f* in ring 12*b* of FIG. 2 have failed, the information within the field 24 in the flooding packet 22 of FIG. 3 identifies nodes 14*f* and 14*g* as the failure node pair. Field 26 that stores information about the identity of the node (e.g., node 14*f*) whose associated processor (processor 20*f*) generated the flooding packet 22. Field 28 stores information that identifies the node (e.g., node 14*e*) destined to receive the flooding packet 22.

Field 30 contains a count indicative of successive number of nodes that have been flooded with a flooding packet. As will be discussed below, upon receipt of a flooding packet 22, each receiving node, in turn, floods at least one of its neighbors with a packet. For example, the flooding packet that generated by the node 14*f* has a field count of 1. However, the field count for the packet flooded by the node 14e to the node 14*d* has a field count of 2.

Field 32 within the flooding packet 22 stores information indicative of the spare capacity availability associated with that node sending the packet. For example, the flooding packet 22 sent by the node 14*f* in ring 12b would indicate that no spare capacity exists on either of the links 16*f* and 18*f* because those links have failed. However, the links 16*e (or* 18e*)* may contain some spare capacity, and if so, information indicative of such that capacity is specified in the field 32. Field 34 stores information indicative of the identity of the ring whose node has generated the flooding packet 22. Thus, if the node generating the flooding packet 22 resided within the ring 12b, the field 34 would so indicate.

Field 36 within the flooding packet 22 contains information indicative of the transmission capacity required for restoration purposes. For example, in the illustrated embodiment, five separate trunks, each of OC-48 capacity, may be needed between a particular pair of nodes. If such is the case, then the field 36 will so indicate. Lastly, field 38 contains a cyclic redundancy check code for error checking purposes to allow a recipient node to verify that it has correctly received the flooding packet.

Referring to FIG. 2, at time T₂, the LP 20*f* associated with node 14*f* floods the nodes 14*e* and 14*c* with packets. In turn, each of the nodes 14*e* and 14*c* floods each of its neighboring nodes 14*g* and *14*d, and 14*b* and 14*d*, respectively, with a packet 22 at time T₃. At time T₄, the node 14*d* floods its neighboring node 14*a* with a packet while the node 14*b* floods its neighboring nodes 14*a* and 14*j* with a packet. At time T₅, the node 14*j* floods its neighboring nodes 14*k* and 14*l* with packets. At time T₆, the node 14*l* floods the node 14*k* with a packet, whereas the node 14*k* now floods the nodes 14*h*. At time T₇, the node 14*h* floods the node 14*i* with separate packets across the links 16*i* and 16*h*, respectively. Lastly, at time T₈, the node 14*i* floods the node 14*g* with a packet to cause that node to ascertain its characteristics and available capacity.

By successively flooding the nodes within the transmission system 10 of FIG. 1 with packets in the manner described, information can be obtained regarding where potential restoration capacity exists within the system. For the illustrated embodiment of FIG. 1, exemplary restoration capacities are listed below in Table 1.

**Table 1**

| **Time** | **From** | **To** | **Spare Capacity (OC-48s)** | **Distance** | **Count** | **Ring** |
|---|---|---|---|---|---|---|
| T ₂ | 14 *f* | 14 *e* | 5 | 25 miles | 1 | 12 *b* |
| T ₂ | 14 *f* | 14 *c* | 5 | 25 miles | 1 | 12 *a* |
| T ₃ | 14 *e* | 14g | 5 | 125 miles | 2 | 12 *b* |
| T ₃ | 14 *c* | 14 *d* | 5 | 25 miles | 2 | 12 *a* |
| T ₃ | 14 *c* | 14 *b* | 5 | 25 miles | 2 | 12 *a* |
| T ₄ | 14 *d* | 14 *a* | 5 | 175 miles | 3 | 12 *a* |
| T ₄ | 14 *b* | 14 *a* | 5 | 25 miles | 3 | 12 *a* |
| T ₄ | 14 *b* | 14 *j* | 5 | 10 miles | 3 | 12 *d* |
| T ₅ | 14 *j* | 14 *k* | 5 | 50 miles | 4 | 12 *d* |
| T ₅ | 14 *j* | 14 *l* | 5 | 150 miles | 4 | 12 *d* |
| T ₆ | 14 *l* | 14 *k* | 5 | 50 miles | 5 | 12 *d* |
| T ₆ | 14 *k* | 14 *h* | 5 | 50 miles | 5 | 12 *c* |
| T ₇ | 14 *h* | 14 *i* | 5 | 100 miles | 5 | 12 *c* |
| T ₇ | 14 *h* | 14 *i* | 5 | 150 miles | 5 | 12 *c* |
| T ₈ | 14 *i* | 14 *g* | 5 | 125 miles | 5 | 12 *b* |

It should be noted that no capacity exits between nodes 14*g* and 14*f* because of the failure of both links 16*f* and 18*f*. Further, no capacity exits between nodes 14*e* and 14*g* across either of the links 16*g* and 18*g*. For example, the both of the links 16*g* and 18*g* may be out of service. Alternatively, these links may be in service but may lack any additional restoration capacity.

### Phase 2 - Restoration Capacity Reservation

Having established the available restoration capacities during the phase 1, a set of capacities (i.e., links) is reserved during phase 2 to provide a restoration path between a pair of nodes, say nodes 14*a* and 14*g*, that optimizes the transmission of traffic between them. Transmission optimization is accomplished by minimizing the overall length of the selected restoration capacities. Thus, as between two possible links across which restoration traffic may be routed, the shorter of the two links is preferred. Additionally, to optimize the transmission of traffic, the number of nodes crossed should be minimized in order to minimize any latency delay.

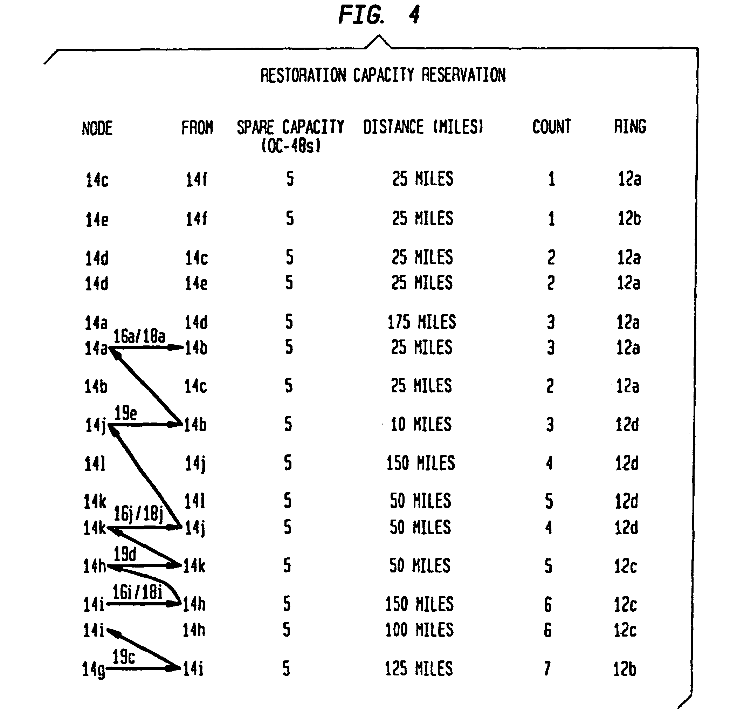

Given the constraints of minimizing the length of the links, and minimizing the number of nodes crossed, for the available restoration capacities depicted in FIG. 4, a restoration path can readily be reserved along the links 16*a*/18*a,* 19*e*, 16*j*/18*j*,19*d*,16*i*/18*i* and 19*c*. The restoration path reserved along the links 16*a*/18*a,* 19*e,* 16*j*/18*j*, 19*d,* 16*i*/18*i* and 19*c* has the shortest overall length and crosses the least number of nodes.

While other possible restoration paths exist, none has the shortest overall length and the least number of nodes crossed. For example, a restoration path could be reserved via the links 16*a*/18*a*, 19*e*, 16*l*/18*l*, 16*k*/18*k*, 19*d*, 16*i*/18*i* and 19c. However, by comparison to the restoration path reserved along the links *16a*/18*a*, *19e*, *16j*/*18j*, *19d, 16i*/*18i* and 19*c*, a path reserved along the links 16*a*/18*a*, *19e*, *16l*/*18l*, 16*k*/18*k*, 19*d*, 16*i*/18*i* and 19*c* would have a greater overall length and would cross more nodes.

There are several possible approaches that may be employed to reserve the optimal restoration path. If the number of nodes and links are not too numerous, it may be desirable to establish all possible restoration paths and then compare them to determine which one possess the shortest overall length and lowest number of node crossings. If the number of nodes and links are large, an iterative approach may be more desirable. Initially, a restoration path comprised of the shortest possible individual links is tentatively selected. If that path has less node crossings than a path comprised of a successively selected set of links, then the former path would be reserved. Otherwise, the process continues with another iteration.

### Phase 3 - Cross Connection

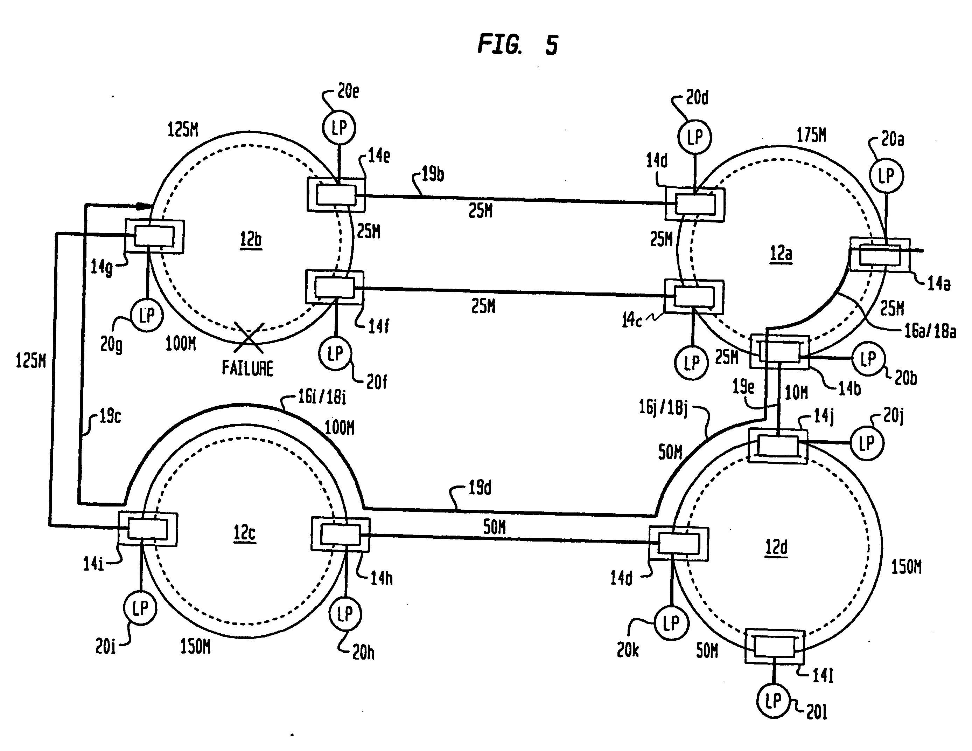

Once the restoration capacity is reserved during phase 2, then a restoration path is routed along the reserved capacity. Referring now to FIG. 5, in the illustrated embodiment, the restoration path is routed along the segments 16*a*/18*a*, 19*e*, *16j*/18*j*, 19*d*, 16i/18i and 19c by cross-connecting the nodes *14b, 14j,* 14*k*, 14h, and 14*j*. Actual cross connection of these nodes can be readily accomplished automatically by the appropriate receipt of control signals at the line processor at each node since each typically possesses automatic cross-connection capability. Alternatively, such cross-connections could be accomplished manually in the event that one or more nodes lack an ability to automatically cross-connect links.

The foregoing describes a technique for accomplishing restoration of traffic in a multiple ring system 10 via alternate rings should two or more links in a given ring fail. As may be appreciated, the traffic restoration technique of the invention has the capability to achieve rapid restoration, particularly by the use of the line processors 20*a*-20*l* for automatically establishing the available restoration capacity in a time manner. Once the restoration capacity has been established, an optimal restoration path can be reserved, and thereafter realized by cross-connecting appropriate nodes far more quickly than the usual time needed to physically restore one or more failed links.

## Claims

1. A method of restoring traffic upon the failure of at least one link in a ring of a transmission system for carrying telecommunications traffic, said system comprised of multiple, interconnected rings (12a-12d), each comprised of at least two nodes (14a-141), each node linked to each of a pair of neighboring nodes by at least one main link (1 6), the method comprising the steps of:
a) hunting among the rings (12a-12d) for available restoration capacities for carrying restoration traffic, said available restoration capacities being established in terms of available links defining possible alternative paths between an origin and destination nodes;
(b) reserving, among the available restoration capacities, a selected set of restoration capacities that optimizes restoration traffic; and
c) cross-connecting said selected set of restoration capacities to establish a route for. carrying restoration traffic,
**characterized in that**
- at the hunting step, information on distance of the available links and a count value defining the number of nodes crossed is obtained for the available restoration capacities; and
- at the reserving step, the set of restoration capacities is selected from among the available restoration capacities as the set of restoration capacities which provides the path having the shortest overall length and which crosses the least number of nodes.

2. The method according to claim 1 wherein the step of hunting for available restoration capacity comprises the steps of:
a) flooding a first packet of information from a first node associated with a fail link to at least one neighboring node to cause said neighboring node to ascertain its available restoration capacity;
b) flooding a subsequent packet of information from said neighboring node to at least one of its neighboring nodes to cause it ascertain its available restoration capacity; and
c) repeating the preceding step b) until the nodes are successively flooded with packets to establish the available restoration capacities within the system.

3. The method according to claim 1, wherein the restoration capacities in said selected set are cross-connected automatically.

4. The method according to claim 1, wherein the restoration capacities in said selected set are cross-connected manually.

## Patentansprüche

1. Verfahren zur Wiederherstellung eines Verkehrs nach dem Ausfallen von wenigstens einem Verbindungsglied in einem Ring eines Übertragungssystems, welches für den Telekommunikationsverkehr ausgelegt ist, wobei das System eine Vielzahl an untereinander verbundenen Ringen (12a-12d) aufweist, von denen jeder wenigstens zwei Knotenpunkte (14a-14l) umfaßt, wobei jeder Knotenpunkt mit jedem von einem Paar von benachbarten Knotenpunkten durch wenigstens ein Hauptverbindungsglied (16) verkettet ist, welches Verfahren die folgenden Schritte umfaßt:
a) Suchen nach verfügbaren Wiederherstellungskapazitäten in den Ringen (12a-12d) zur Übernahme von einem Wiederherstellungsverkehr, wobei die verfügbaren Wiederherstellungskapazitäten in Form von verfügbaren Verbindungsgliedern erstellt werden, die mögliche alternative Pfade zwischen einem Ursprungs- und Bestimmungs-Knotenpunkt definieren;
b) Bevorratung unter den verfügbaren Wiederherstellungskapazitäten eines ausgewählten Satzes von Wiederherstellungskapazitäten, welcher den Wiederherstellungsverkehr optimiert; und
c) Vornehmen einer Kreuzverbindung an dem ausgewählten Satz der Wiederherstellungskapazitäten, um eine Route zur Übernahme des Wiederherstellungsverkehres zu erstellen,
**dadurch gekennzeichnet, daß**
bei dem Suchschritt Informationen hinsichtlich des Abstandes der verfügbaren Verbindungsglieder und ein Zählwert, der die Anzahl an Knotenpunkten, die gekreuzt wurden, definiert, für die verfügbaren Wiederherstellungskapazitäten abgeleitet werden;
bei dem Bevorratungsschritt der Satz der Wiederherstellungskapazitäten aus den verfügbaren Wiederherstellungskapazitäten als ein Satz der Wiederherstellungskapazitäten ausgewählt wird, die den Pfad liefern, welcher die kürzeste Gesamtlänge besitzt und welcher die geringste Anzahl an Knotenpunkten kreuzt.

2. Verfahren nach Anspruch 1, bei dem der Suchschritt nach verfügbaren Wiederherstellungskapazitäten die folgenden Schritte umfasst:
a) Fluten eines ersten Paketes an Informationen von einem ersten Knotenpunkt, der einem ausgefallenen Verbindungsglied zugeordnet ist, zu wenigstens einem benachbarten Knotenpunkt, um den benachbarten Knotenpunkt zu veranlassen, seine verfügbare Wiederherstellungskapazität zu bestätigen;
b) Fluten eines nachfolgenden Paketes an Informationen von dem benachbarten Knotenpunkt zu wenigstens einem von dessen benachbarten Knotenpunkten, um diesen zu veranlassen, seine verfügbare Wiederherstellungskapazität zu bestätigen;
c) Wiederholen des vorhergehenden Schrittes b), bis die Knotenpunkte aufeinanderfolgend mit Paketen geflutet wurden, um die verfügbaren Wiederherstellungskapazitäten innerhalb des Systems zu erstellen.

3. Verfahren nach Anspruch 1, bei dem die Wiederherstellungskapazitäten in dem ausgewählten Satz automatisch kreuzverbunden werden.

4. Verfahren nach Anspruch 1, bei dem die Wiederherstellungskapazitäten in dem ausgewählten Satz von Hand kreuzverbunden werden.

## Revendications

1. Procédé de restauration du trafic après la défaillance d'au moins une liaison dans un anneau d'un système de transmission pour transporter le trafic de télécommunications, ledit système étant constitué de multiples anneaux (12a-12d) interconnectés, constitués chacun d'au moins deux noeuds (14a-141); chaque noeud étant relié à chacun d'une paire de noeuds voisins par au moins une liaison principale (16), le procédé comprenant les étapes suivantes :
a) recherche parmi les anneaux (12a-12d) des capacités de restauration disponibles pour effectuer la restauration du trafic, lesdites capacités de restauration disponibles étant établies sous forme de liaisons disponibles définissant des chemins alternatifs possibles entre des noeuds d'origine et de destination;
b) réservation parmi les capacités de restauration disponibles d'un jeu sélectionné de capacités de restauration qui optimise la restauration du trafic; et
c) interconnexion dudit jeu sélectionné de capacités de restauration pour établir un chemin pour effectuer la restauration du trafic,
**caractérisé en ce que**
- à l'étape de recherche, des informations sur la distance des liaisons disponibles et une valeur définissant le nombre de noeuds traversés sont obtenues pour les capacités de restauration disponibles; et
- à l'étape de réservation, le jeu de capacités de réservation est sélectionné parmi les capacités de restauration disponibles comme étant le jeu de capacités de restauration qui offre le chemin ayant la plus courte longueur totale et qui traverse le plus petit nombre de noeuds.

2. Procédé selon la revendication 1, dans lequel l'étape de recherche de capacités de restauration disponibles comprend les étapes suivantes :
a) transmission d'un premier paquet d'informations saturant d'un premier noeud associé avec une liaison défaillante vers au moins un noeud voisin pour forcer ledit noeud voisin à vérifier sa capacité de restauration disponible;
b) transmission d'un autre paquet d'informations saturant dudit noeud voisin vers au moins un de ses noeuds voisins pour le forcer à vérifier sa capacité de restauration disponible; et
c) répétition de l'étape précédente b) jusqu'à ce que les noeuds soient successivement saturés de paquets pour établir les capacités de restauration disponibles au sein du système.

3. Procédé selon la revendication 1, dans lequel les capacités de restauration dans ledit jeu sélectionné sont interconnectées automatiquement.

4. Procédé selon la revendication 1, dans lequel les capacités de restauration dans ledit jeu sélectionné sont interconnectées manuellement.
